(19) Europäisches Patentamt
European Patent Office
Office européen des brevets

(11) Publication number: **0 162 304**
**A2**

# (12) EUROPEAN PATENT APPLICATION

(21) Application number: **85104818.1**

(22) Date of filing: **20.04.85**

(51) Int. Cl.$^4$: **C 08 F 2/38**
C 09 D 3/74, C 08 L 63/00

(30) Priority: **23.04.84 US 603218**

(43) Date of publication of application:
**27.11.85 Bulletin 85/48**

(84) Designated Contracting States:
**BE DE FR GB IT NL**

(71) Applicant: **DeSOTO, INC.**
**1700 South Mt. Prospect Road**
**Des Plaines Illinois 60018(US)**

(72) Inventor: **Bishop, Timothy E.**
**1631 N. Windsor 309**
**Arlington Hgsts Ill. 60004(US)**

(72) Inventor: **Pasternack, George**
**38 Oxford Drive**
**Lincolnshire Ill. 60015(US)**

(72) Inventor: **Zimmerman, John M.**
**563 Franklin Drive Apt. 205**
**Mount Prospect Ill. 60056(US)**

(74) Representative: **Reitzner, Bruno, Dr.**
**Patentanwälte Dipl.-Ing. R. Splanemann Dr. B. Reitzner**
**Tal 13**
**D-8000 München 2(DE)**

## (54) Cationic ultraviolet cure of hydroxyl-terminated polymers.

(57) Liquid coating compositions are described which cure on exposure to ultraviolet light by a cationic mechanism and which comprise: (1) a cationically curable polyepoxide; (2) a polyalcohol component comprising an addition polymer or copolymer having a weight average molecular weight of from about 1,500 to about 15,000 of polymerized monoethylenically unsaturated monomers which may include up to 15% by weight of an hydroxy-functional monomer, and which carries an hydroxyl group at most of its ends to provide an average of from about 1.6 to 5 hydroxyl groups per polymer molecule; and (3) a catalyst which promotes the desired cationic cure on ultraviolet radiation. The hydroxyl-terminated polymer is preferably liquid to slowly flowable at room temperature in the absence of solvent, and it enables coatings which are sufficiently liquid for coating application with little if any, solvent, and it provides a new balance of coating hardness and modulus.

EP 0 162 304 A2

# CATIONIC ULTRAVIOLET CURE OF HYDROXYL-TERMINATED POLYMERS

## DESCRIPTION

### Technical Field

This invention relates to coating compositions which cure on exposure to ultraviolet light by a cationic mechanism.

### Background Art

Compositions which cure by a cationic mechanism on ultraviolet exposure are known. These may include three essential components, namely: (1) a cationically curable polyepoxide; (2) a polyhydric alcohol; and (3) a catalyst which promotes the desired cationic cure in the presence of ultraviolet radiation. In the prior efforts in this area, one could choose a relatively low molecular weight compound or oligomer containing only a small number of hydroxyl groups per molecule, or a relatively high molecular weight addition polymer or copolymer containing a large number of hydroxyl groups per molecule. Depending upon the choice of the alcohol or polyalcohol which was made, one could obtain cured coatings which were hard and relatively brittle, or one could instead obtain cured coatings which were flexible and soft, but intermediate characteristics were hard to obtain. More particularly, cured coatings having increased physical toughness at reduced hardness were not obtainable.

### Disclosure of Invention

In accordance with this invention, we have found that a new balance of properties can be obtained if these known systems comprising cationically curable polyepoxide, polyhydric alcohol and catalyst promoting cationic cure on ultraviolet radiation are modified to include an addition

polymer or copolymer having a weight average molecular weight from about 1,500 to about 15,000 of polymerized monoethylenically unsaturated monomers which may include up to 15% by weight of an hydroxy-functional monomer, and which carries an hydroxyl group at most of its ends to provide an average of from about 1.6 to 5 hydroxyl groups per polymer molecule. These are uniquely adapted to be included in the cationic ultraviolet-curable coating compositions in the absence of inert solvent.

The preferred polymers and copolymers are liquid to slowly flowable at room temperature in the absence of solvent.

The hydroxy-terminated polymers and copolymers which are employed herein are described in the commonly owned copending application of J. Zimmerman, J. Krajewski and G. Noren,* and are produced by polymerization in inert organic solvent solution containing a bis hydroxyorganic xanthogen disulfide chain-terminating agent in which the organic group is preferably an alkylene group, as in bis (4-hydroxybutylxanthogen) disulfide. This provides a linear polymer most of the molecules of which are terminated by an hydroxyl group at each of its opposite ends and having a molecular weight largely controlled by the proportion of the chain-terminator which produces a much lower molecular weight than is obtained using conventional chain terminators. Those which are liquid, or at least slowly flowable, at room temperature in the absence of solvent are preferred.

The monomers which are copolymerized may be free of hydroxy functionality, or they may contain a proportion of an hydroxy monomer, preferably not more than about 10% by weight of total monomers, to increase cure speed or cross-link density, as

*(EPO-Appln. ; Attorney*s docket 1717-X-12.843)

desired. Suitable hydroxy monomers are hydroxyalkyl acrylates or methacrylates in which there are 2-4 carbon atoms in the alkyl group, such as 2-hydroxyethyl acrylate or methacrylate, 2-hydroxypropyl acrylate, or 2-hydroxybutyl acrylate. Allyl alcohol is also useful. The properties conferred by the hydroxy polymer can vary considerably depending on cross-link density controlled by the number of acrylate groups per molecule, and also upon the selection of the chemical constitution and molecular weight of the polymer.

As previously noted, the hydroxyl-terminated polymers and copolymers which are used herein are preferably liquid or slowly flowable at room temperature in the absence of organic solvent. Linear polymers having a weight average molecular weight of from about 1,500 to about 15,000 are contemplated for use in this invention, but it is preferred to have a molecular weight in the range of 2,000 to 12,000, more preferably from 3,000 to 10,000. The physical character of any particular molecular weight polymer will vary with the glass transition temperature of the polymer (calculated from the monomer content in known fashion), so molecular weight is only one factor to be considered. These low molecular weights are obtained at high yield of monomer to polymer, usually 90% or better. As a matter of interest, if the solvent is removed at the end of the polymerization reaction, unreacted monomer is normally removed with the solvent, so the unreacted monomer content of the polymeric product is usually below 1%.

To more fully describe the method of producing the hydroxy-terminated polymers and copolymers which are used herein, these are produced by polymerizing monoethylenically unsaturated

monomers in organic solvent solution medium containing a conventional free radical initiator, such as a peroxide, like benzoyl peroxide, or a diazo compound like azo bis isobutyronitrile, and a proportion of a chain-terminating agent which is a bis hydroxyorganic xanthogen disulfide in which the hydroxy group is the sole reactive group carried by the organic group. The preferred organic group is the alkylene group containing from 2-18 carbon atoms, preferably from 3-6 carbon atoms, such as ethylene, propylene, or butylene groups. The proportion of the disulfide chain terminator is determined by the molecular weight which is desired, as will be explained.

It should be stressed that the polymers and copolymers which are provided in the manner described are of unusually low molecular weight, and are frequently liquid, and are accordingly very easy to dissolve in organic liquids. The increased liquidity enabled by employing the polymers which have been described is thus important in allowing addition copolymers of monoethylenically unsaturated monomers to be effectively used in a desired large proportion in radiation-curable coating compositions where inert volatile solvents are preferably absent.

The chain terminating agents which are used to provide the controlled molecular weight and hydroxy terminal groups at both ends of the polymer molecule preferably have the following structure:

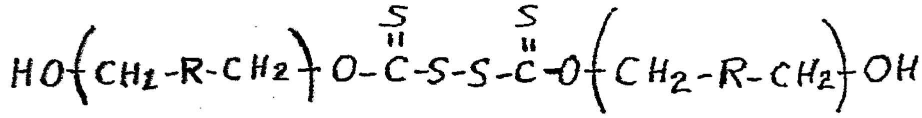

where R is an organic radical free of reactive groups (preferably a hydrocarbon group and most preferably an alkylene group) containing from 0 to 16 carbon atoms, preferably 2 carbon atoms to provide a

butylene group, and the OH group is preferably a primary OH group. Suitable groups are the ethylene group, the butylene group, the hexylene group, the dimethyl benzyl group, the dibutyl ether group, and the like. Any organic compound free of reactive groups other than the two alcoholic hydroxy groups or the anhydride of these two hydroxy groups can be incorporated into the xanthogen compound in the same known way as butylene glycol provides the compound which is used as illustrative herein.

The polymers and copolymers which are formed using the above-described chain terminating agents have the following structure after reaction with the monoethylenically unsaturated monomer having a single group reactive with the hydroxy group:

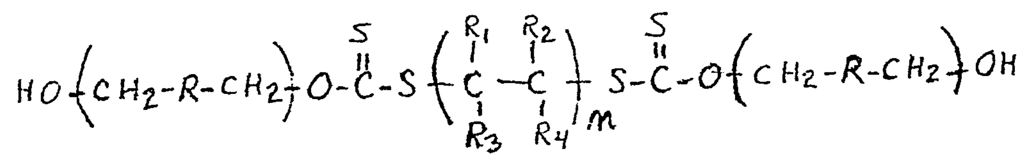

where R is the same as indicated previously, $R_1$, $R_2$, $R_3$ and $R_4$ are the remaining groups in the monoethylenic monomers which were polymerized, or hydrogen, and n is the number of repeating units in the polymer providing a molecular weight of from about 1,500 up to 15,000. Polymers which are liquid to slowly flowable are especially preferred.

It will be understood that the conventional initiator will initiate some polymer growth as well as function to convert the chain terminators used herein into free radicals which are effective to both initiate and terminate polymer growth, though most of the termination is by chain transfer with the disulfide. As a result, and while most of the polymer molecules will be hydroxy terminated at both ends, some of these molecules will be hydroxy terminated at only one end, and some molecules may

terminate conventionally and not have hydroxy terminal groups. To minimize the presence of polymer molecules with no hydroxy group or with only one hydroxy group, it is permissible to include a small proportion of hydroxy monomer in the monomers which are copolymerized, as previously pointed out. In this way, the polymer will carry an average of from about 1.6 to 5 hydroxyl groups per molecule.

Various monoethylenic monomers may be used alone or in any desired combination, though it is preferred that at least 30%, preferably at least 50%, of the copolymer is an acrylate or methacrylate ester with an alkanol containing from 1-18 carbon atoms.

Typical monomers which can be used to form the polymers or copolymers of this invention are styrene, vinyl toluene, vinyl acetate, acrylamide, esters of monoethylenic acids, like methyl, ethyl, propyl, butyl acrylate, 2-ethylhexyl acrylate, or the corresponding methacrylates, acrylonitrile, vinyl butyl ether, ethylene, and the like.

It is of interest to note that one can form liquid addition polymers conventionally by using a very large proportion of a low glass transition temperature monomer, such as 2-ethylhexyl acrylate, but these cure to form tacky films which are not desired, except in pressure-sensitive coatings.

When application of the coating compositions of this invention on optical glass fiber is contemplated, halogen-containing monomers are particularly desired, these being illustrated herein by vinyl chloride, vinylidene chloride and vinylidene bromide. Vinylidene chloride is particularly easy to use, and since it provides polymers which have a high refractive index, it is preferred for the coating of optical glass fibers. Copolymers of these with acrylate esters, like methyl acrylate or isobutyl

methacrylate, are particularly contemplated, as will be illustrated hereinafter.

The hydroxyl group of the chain-terminating agent is preferably a primary hydroxyl group to minimize its reactivity with acrylate or methacrylate unsaturation. Of course, when such unsaturation is not present, the primary nature of the hydroxyl group is no longer important.

The proportion of the chain terminating agent which may be used herein may vary widely, but the desired low molecular weight is obtained using an amount of up to about 20%, preferably from 2.0% to 15%, based on the weight of the monomers being polymerized or copolymerized. Proportions are important because the proportion of the chain terminator determines the molecular weight which is produced. The more chain terminator, the lower the molecular weight. One molecule of chain terminator for every 15,000 units of monomer molecular weight will yield a weight average molecular weight of about 15,000 plus the weight of the chain terminator (which is comparatively small). The proportion of chain terminator is thus more fully defined by the molecular weight which is desired, and that is more fully defined by the physical character of the polymeric product at room temperature after solvent has been removed.

In the cationically curable systems under consideration, these polymers provide a new balance of physical properties, and considerable variation is possible by varying the chemical constitution and molecular weight of the polymer which is formed.

In a previous application filed by G. Pasternack, T. Bishop and O. R. Cutler Jr., it was found that ultraviolet-initiated cationically curable liquid coating compositions are particularly useful

for coating optical glass fibers to provide either prime coatings for such fibers which are overcoated to provide enhanced abrasion resistance, or single coatings for such fibers. The coating compositions of this invention can be formulated to be even better suited to the coating of optical glass fibers because they possess greater abrasion resistance at any given modulus of elasticity.

The polyepoxides which are cationically curable and used in this invention constitute a known class of materials. Those based on hydrogenated bisphenol, such as Eponex DRH 1511 and DRH 1510, are useful herein, but cycloaliphatic liquid epoxy resins, such as Bakelite ERL 4221 and ERL 4299, are also useful. Hydantoin-based polyepoxides are also useful and available from Ciba-Geigy. These may be used alone, or in combination with glycidyl ethers of a bisphenol, such as the Shell products Epon 828 and Epon 1001, or the Ciba-Geigy product Araldite 6010. These commercial products are all of known composition. Polyepoxides based on phenolic novalac resins and epoxidized polybutadienes, are also useful, especially in admixture with the hydrogenated bisphenol-based polyepoxides or the cycloaliphatic polyepoxides. Even monoepoxides may be present, such as Cardura E from Shell Chemical Company which is a glycidyl ester of neodecanoic acid.

Photoinitiators useful for the ultraviolet-initiated cationic cure of appropriate polyepoxides in admixture with polyhydric alcohols are known. Diaryliodonium salts, such as the 3M product FC 509, are particularly contemplated, and these are normally used in combination with a ketonic photosensitizer, such as benzophenone. Other photosensitizers are illustrated by chlorothioxanthone, isopropylthioxanthone,

thioxanthone, xanthone, and the like. Benzophenone is preferred because of its greater solubility and lower cost.

Since iodonium salts normally require ketonic photosensitizers, it is preferred to employ triaryl sulfonium salts, such as the 3M product FC 508 and UVE-1014 from General Electric Co. These sulfonium salts do not require ketonic photosensitizer.

Referring more particularly to the optional polyhydric alcohol, this component is subject to wide variation so long as basic substituents and contaminants are absent. Polyhydric alcohols which are polyethers, such as $C_2$-$C_4$ alkylene oxide adducts of polyhydric alcohols, such as ethylene glycol, butylene glycol, glycerin, trimethylol propane and the like are all useful. Pluracol TP 440 and P 1010 supplied by Wyandotte, polypropylene glycol 425, and Dow products 565 and 8025, all of which are known compositions, can be used herein to supplement the hydroxyl groups provided by the hydroxyl-terminated polymer or copolymer. These conventional polyhydric alcohols are useful in providing desired fluidity in the coating composition by the use of something which cures to become an integral part of the final film.

Throughout this application, and in the examples and claims which follow, all parts and proportions are by weight, unless otherwise stated.

Example 1 (synthesis of bis (4-hydroxybutylxanthogen) disulfide)

1338.2 grams of 1,4-butanediol (14.849 moles) and 143.0 grams of carbon disulfide (1.1878 moles) were poured into a 5 liter 4-necked round bottom flask fitted with a stirrer, a dropping funnel, and a thermometer. The flask was immersed in

ice water to cool its contents to 17°C. and 260 ml. of an aqueous solution containing 75.7 grams of sodium hydroxide (1.893 moles) were added through the dropping funnel over a period of 1 hour. The mixture in the flask was stirred at room temperature for 3 hours. 400 ml. of water were then added and then 550 ml. of an aqueous solution containing 242.7i grams of ammonium persulfate were added dropwise over a 1 hour period. The product was then diluted with 800 ml. of water and then extracted with 1500 ml. of methylene chloride. This dilution with water followed by extraction with methylene chloride was carried out twice and the product was then contacted with magnesium sulfate to remove any water present. The methylene chloride was then removed by vaporizing it at 30°C. under vacuum. 312.6 grams of liquid product having a yellow color and a slight sulfur odor were obtained. This represents a yield of 100.7% of the theoretical yield.

Example 2 (Production of low molecular weight polymer)

A 3 liter 4-necked flask was set up with a stirrer, a thermocouple probe, a cold water condenser, and a nitrogen blanket and placed in a water bath maintained at 60°C. 2.0 grams of the commercial free radical generating catalyst (Vazo 52) were added to the flask in 62.1 grams of methyl ethyl ketone. After 5 minutes to warm the flask contents, a separately prepared liquid mixture of 100 grams of a mixture of vinylidene chloride and methyl acrylate in a mole ratio of 63:37 to which was added 3.83 grams of the bis (4-hydroxybutylxanthogen) disulfide of Example 1 was slowly added to the flask over a 3 hour period. The temperature in the flask increased as the monomer reacted, and when the temperature finally subsided back to the temperature which existed before monomer addition, it was

concluded that polymerization was complete. The solvent was then removed at 60°C. using a vacuum which reached 30 mm Hg.

The product had a theoretical equivalent weight (based on hydroxy) of 4600.

Example 3

Example 2 is repeated replacing the 100 grams of monomers used therein with 100 grams of a liquid mixture of vinylidene chloride and 2-ethylhexyl acrylate in a mole ratio of 80:20 using 5 grams of the same xanthogen disulfide chain-terminating catalyst. The product had a theoretical equivalent weight of 3500.

Example 4

Example 3 was repeated using 100 grams of a monomer mixture using methyl acrylate in place of 2-ethylhexyl acrylate and 4.1 grams of the same xanthogen disulfide chain-terminating catalyst. The product had a theoretical equivalent weight of 4300.

Example 5

Example 4 was repeated using 6.72 grams of the same xanthogen disulfide catalyst chain-terminating catalyst. The product had a theoretical equivalent weight of 2700.

Example 6

Example 2 was repeated using 100 grams of methyl acrylate as the sole monomer and 4.15 grams of the same xanthogen disulfide catalyst chain-terminating catalyst. The product had a theoretical equivalent weight of 4200.

Cure of the above hydroxy polymers is shown in the following tables in which the viscosities noted are measured on a Brookfield viscometer using a #6 spindle and 100 rpm at 25.0°C. The number of passes to provide a tack-free cure involves exposure to 1.7 $J/cm^2$ of ultraviolet light on each pass.

Table 1

| Component | Ex. A | Ex. B | Ex. C. | Ex. D | Ex. E |
|---|---|---|---|---|---|
| DRH 151 | 86.0 | 86.0 | 86.0 | 66.0 | 86.0 |
| Ex. 2 | 10.0 | - | - | - | - |
| Ex. 3 | - | 10.- | - | - | - |
| Ex. 4 | - | - | 10.0 | - | - |
| Ex. 5 | - | - | - | 30.0 | - |
| Ex. 6 | - | - | - | - | 10.0 |
| UVE-1014 | 4.0 | 4.0 | 4.0 | 4.0 | 4.0 |

In the above Table 1, DRH 151 is a liquid diglycidyl ether of a saturated bisphenol A available from Shell Chemical Company. UVE-1014 is available from General Electric Company. It is a 50% by weight solution of triphenyl sulfonium hexafluoroantimonate in propylene carbonate.

Table 2

| Properties | Ex. A | Ex. B | Ex. C | Ex. D | Ex. E |
|---|---|---|---|---|---|
| Clarity | clear | clear | hazy | clear | clear |
| Viscosity (cps) | 3040 | 2130 | 3960 | 3490 | 2410 |
| Tensile (psi) | 3313 | 3286 | 4624 | 1007 | 3549 |
| Elongation (percent) | 8 | 9 | 5 | 42 | 4 |
| Modulus (psi) | 114400 | 102857 | 152286 | 14331 | 127800 |
| Rupture (in-lb/$in^3$) | 384 | 400 | 258 | 482 | 185 |
| Cure (passes) | 2 | 2 | 2 | 3 | 2 |

As can be seen, coatings with an exceptionally high modulus possess a small but significant elongation, while products with as much as 42% elongation still have a significant tensile strength.

CLAIMS

1. A liquid coating composition which cures on exposure to ultraviolet light by a cationic mechanism comprising: (1) a cationically curable polyepoxide; (2) a polyhydric alcohol component comprising an addition polymer or copolymer having a weight average molecular weight of from about 1,500 to about 15,000 of polymerized monoethylenically unsaturated monomers which may include up to 15% by weight of an hydroxy-functional monomer, and which carries an hydroxyl group at most of its ends to provide an average of from about 1.6 to 5 hydroxyl groups per polymer molecule; and (3) a catalyst which promotes the desired cationic cure on ultraviolet radiation.

2. A liquid coating composition as recited in claim 1 in which said hydroxy-terminated polymer is liquid to slowly flowable at room temperature in the absence of solvent.

3. A liquid coating composition as recited in claim 1 in which said monomers include up to 10% by weight of total monomers of an hydroxyl-functional monomer.

4. A liquid coating composition as recited in claim 1 in which said monomers which are polymerized in said hydroxy-terminated polymer include at least 30% of acrylate or methacrylate monomers.

5. A liquid coating composition as recited in claim 1 in which said addition polymer is terminated with a bis hydroxyorganic xanthogen disulfide chain-terminating agent.

6. A liquid coating composition as recited in claim 5 in which the organic group of said chain-terminating agent is an alkylene group which contains from 2-18 carbon atoms.

7. A liquid coating composition as recited in claim 5 in which said alkylene group contains from 3-6 carbon atoms and said hydroxy groups are primary hydroxy groups.

8. A liquid coating composition as recited in claim 1 in which said polymer has the structure:

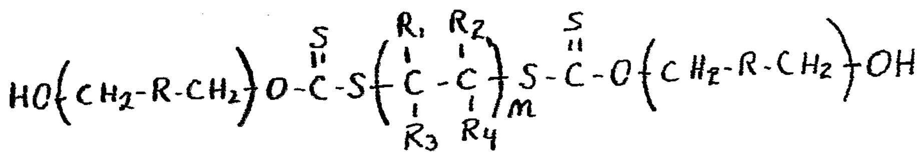

where R is an organic radical free of reactive groups, $R_1$, $R_2$, $R_3$ and $R_4$ are the remaining groups in the monoethylenic monomers which were polymerized, or hydrogen, and n is the number of repeating units in the polymer providing a molecular weight of from about 2,000 up to 12,000.

9. A liquid coating composition as recited in claim 1 in which there is also present a liquid polyhydric alcohol having a molecular weight above about 300.

10. A liquid coating composition as recited in claim 9 in which said monomers include at least 50% of acrylate or methacrylate monomers.